# EUROPEAN PATENT SPECIFICATION

(11) **EP 1 947 725 B1**
(45) Date of publication and mention of the grant of the patent: **19.10.2011**
(21) Application number: 08152430.8
(22) Date of filing: 07.08.2002
(51) Int. Cl.: H01M 8/10, C08J 5/22

(54) **Polymer electrolyte composition and fuel cell**
Polymerelektrolytzusammensetzung und Brennstoffzelle
Composition électrolytique polymère et pile à combustible

(30) Priority: 09.08.2001 JP 2001241897; 30.08.2001 JP 2001261127
(43) Date of publication of application: 23.07.2008
(62) Divisional of application: 02017695.4
(73) Proprietor: Sumitomo Chemical Company, Limited, Tokyo 104-8260 (JP)
(72) Inventor: Hidaka, Yasuaki, Edogawa-ku, Tokyo (JP); Iwasaki, Katsuhiko, Tsukuba-shi, Ibaraki (JP)
(74) Representative: Vossius & Partner

(56) References cited:
- EP-A- 1 113 515
- US-A- 3 939 168
- US-A- 4 713 305
- US-A- 5 834 523
- US-B1- 6 248 469

## Description

The present invention relates to a polymer electrolyte composition, and specifically to a polymer electrolyte composition preferably used for a fuel cell.

A fuel cell has been recently paid attention to as a device for high efficient and clean energy conversion. Particularly, since a fuel cell which used a polymer electrolyte membrane comprising a polymer electrolyte which has proton conductivity as an electrolyte is a compact structure, gets high power, and can be operated by a simple system, the fuel cell is paid attention to as a mobile power source for vehicles and the like.

The polymer electrolyte used for the fuel cell is a polymer having an electrolyte group such as a sulfonic group and carboxyl group in a polymer chain, and applied to various uses such as electric dialysis, diffusion dialysis in addition to polymer electrolyte membrane of a cell.

The fuel cell is a cell in which a pair of electrodes are provided on both sides of the proton conductive polymer electrolyte membrane, pure hydrogen gas or reformed hydrogen gas is supplied to one of electrode (fuel electrode) as a fuel gas, and an oxygen gas or air is supplied to another electrode (air electrode) as an oxydizing agent to obtain electromotive force.

In fuel cell composed of polymer, it is known that peroxide is generated by the cell reaction in a catalyst layer which was formed at the interface between the polymer electrolyte membrane and the electrode. And the peroxide which is converted to peroxide radical during its diffusion deteriorates the polymer electrolyte membrane. Itisproposed to contain phenols compound in order to provide radical resistance property to the polymer electrolyte membrane (for example, Japanese Patent Publication (Kokai) No.2001-118591).

However, since the radical resistance property is not always adequately satisfied in the polymer electrolyte membrane which contains the phenols compound, it is desired that a polymer electrolyte membrane shows more superior radical resistance property.

It is the object of the present invention to provide a composition of polymer electrolyte superior in the radical resistance property. Further, it is the object of the present invention to provide a polymer electrolyte membrane comprising said polymer electrolyte composition, and a fuel cell comprising said polymer electrolyte membrane.

The present inventors has found that a polymer electrolyte composition which comprises a specific sulfur-containing antioxidant shows a superior radical resistance property, said polymer electrolyte composition shows a good film-forming property, and can be combined with a porous supporting membrane.

The present invention provides a polymer electrolyte composition comprising a polymer electrolyte and at least one antioxidant selected from an antioxidant containing sulfur. Further, the present invention provides a polymer electrolyte membrane comprising said polymer electrolyte composition and a fuel cell comprising said polymer electrolyte membrane.

As the antioxidant containing sulfur which is used for the present invention compounds containing sulfur (hereinafter referred as sulfur-containing compounds) which are indicated by the formulae (VII) to (VIII) described below are mentioned. Two or more of these antioxidants containing sulfur are used in combination.

[R₁₈SCH₂CH₂C(O)OCH₂]₄C (VII)

(wherein R₁₈ represents an alkyl group having 1 to 30 carbons, an aralkyl group having 7 to 30 carbons, or an aryl group having 6 to 30 carbons.), 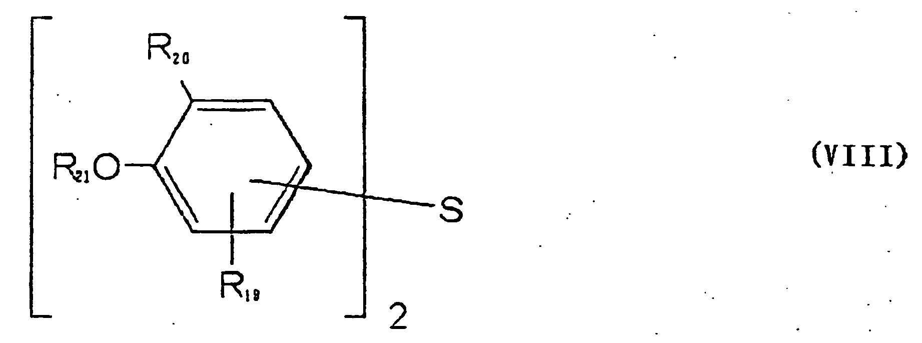 (wherein each of R₁₉, R₂₀ and R₂₁ represents independently a hydrogen atom, an alkyl group having 1 to 30 carbons, an aralkyl group having 7 to 30 carbons, or an aryl group having 6 to 30 carbons.) .

Among these, sulfides which are indicated by the formula (VII) are preferable.

In the formula (VII), the substituent R₁₈ represents an alkyl group having 1 to 30 carbons, an aralkyl group having 7 to 30 carbons, and an aryl group having 6 to 30 carbons, but R₁₈ is preferably an alkyl group having 1 to 20 carbons, a cycloalkyl group having 5 to 20 carbons, an alkylcycloalkyl group having 6 to 20 carbons, an aralkyl group having 7 to 20 carbons, and a phenyl group.

As typical examples of the alkyl group, for example, methyl, ethyl, n-propyl, isopropyl, n-butyl, isobutyl, sec-butyl, tert-butyl, tert-pentyl, iso-octyl, tert-octyl, 2-ethylhexyl, nonyl, decyl, undecyl, dodecyl, tridecyl, tetradecyl, pentadecyl, hexadecyl, heptadecyl, octadecyl, nonadecyl, icosyl and the like are mentioned.

Further, as the cycloalkyl group, cyclopentyl, cyclohexyl, cycloheptyl, cyclooctyl and the like are mentioned, and as the alkylcycloalkyl group, for example, 1-methylcyclopentyl, 1-methylcyclohexyl, 1-methyl-4-isopropylcyclohexyl and the like are mentioned. As the aralkyl group, benzyl, α-methylbenzyl, α,α-dimethylbenzyl and the like are mentioned, but it is not limited to these.

Examples of the sulfides indicated by the formula (VII) include pentaerythrityl tetrakis(3-methylthiopropionate), pentaerythrityl tetrakis(3-ethylthiopropionate), pentaerythrityl tetrakis(3-n-propylthiopropionate), pentaerythrityl tetrakis(3-isopropylthiopropionate), pentaerythrityl tetrakis(3-n-butylthiopropionate), pentaerythrityl tetrakis(3-isobutylthiopropionate), pentaerythrityl tetrakis(3-sec-butylthiopropionate), pentaerythrityl tetrakis(3-tert-butylthiopropionate), pentaerythrityl tetrakis(3-tert-pentylthiopropionate), pentaerythrityl tetrakis(3-iso-octylthiopropionate), pentaerythrityl tetrakis(3-tert-octylthiopropionate), pentaerythrityl tetrakis(3-(2-ethylhexyl)thiopropionate), pentaerythrityl tetrakis(3-nonylthiopropionate), pentaerythrityl tetrakis(3-decylthiopropionate), pentaerythrityl tetrakis(3-undecylthiopropionate), pentaerythrityl tetrakis(3-dodecylthiopropionate), pentaerythrityl tetrakis(3-tridecylthiopropionate), pentaerythrityl tetrakis(3-tetradecylthiopropionate), pentaerythrityl tetrakis(3-pentadecylthiopropionate), pentaerythrityl tetrakis(3-hexadecylthiopropionate), pentaerythrityl tetrakis(3-heptadecylthiopropionate), pentaerythrityl tetrakis(3-octadecylthiopropionate), pentaerythrityl tetrakis(3-nonadecylthiopropionate), pentaerythrityl tetrakis(3-icosylthiopropionate), pentaerythrityl tetrakis(3-cyclopentylthiopropionate), pentaerythrityl tetrakis(3-cyclohexylthiopropionate), pentaerythrityl tetrakis(3-cycloheptylthiopropionate), pentaerythrityl tetrakis(3-cyclooctylthiopropionate), pentaerythrityl . tetrakis(3-(1-methylcyclopentyl)thiopropionate), pentaerythrityl tetrakis(3-(1-methylcyclohexyl)thiopropionate), pentaerythrityl tetrakis(3-(1-methyl-4-isopropylcyclohexyl)thiopropionate ), pentaerythrityl tetrakis(3-benzylthiopropionate), pentaerythrityl tetrakis(3-(α-methyl benzyl)thiopropionate), pentaerythrityl tetrakis(3-(α,α-dimethylbenzyl)thiopropionate) and the like.

Among these, pentaerythrityl tetrakis(3-n-butylthiopropionate), pentaerythrityl tetrakis(3-isobutylthiopropionate), pentaerythrityl tetrakis(3-sec-butylthiopropionate), pentaerythrityl tetrakis(3-tert-butylthiopropionate), pentaerythrityl tetrakis(3-tert-pentylthiopropionate), pentaerythrityl tetrakis(3-iso-octylthiopropionate), pentaerythrityl tetrakis(3-tert-octylthiopropionate), pentaerythrityl tetrakis(3-(2-ethylhexyl)thiopropionate), pentaerythrityl tetrakis(3-nonylthiopropionate), pentaerythrityl tetrakis(3-decylthiopropionate), pentaerythrityl tetrakis (3-undecylthiopropionate), pentaerythrityl tetrakis(3-dodecylthiopropionate), pentaerythrityl tetrakis(3-tridecylthiopropionate), pentaerythrityl tetrakis(3-tetradecylthiopropionate), pentaerythrityl tetrakis(3-pentadecylthiopropionate), pentaerythrityl tetrakis(3-hexadecylthiopropionate), pentaerythrityl tetrakis(3-heptadecylthiopropionate), pentaerythrityl tetrakis(3-octadecylthiopropionate) pentaerythrityl tetrakis(3-nonadecylthiopropionate), and pentaerythrityl tetrakis (3-icosylthiopropionate) , are preferably used.

In the formula (VIII), each of R₁₉, R₂₀ and R₂₁ represents independently a hydrogen atom, an alkyl group having 1 to 30 carbons, an aralkyl group having 7 to 30 carbons, or an aryl group having 6 to 30 carbons.

As the alkyl group, for example, methyl, ethyl, n-propyl, isopropyl, n-butyl, isobutyl, sec-butyl, tert-butyl, tert-pentyl, iso-octyl, tert-octyl, 2-ethylhexyl, nonyl, decyl, undecyl, dodecyl, tridecyl, tetradecyl, pentadecyl, hexadecyl, heptadecyl, octadecyl, nonadecyl, icosyl and the like are mentioned. Among these, methyl, ethyl, n-propyl, isopropyl, n-butyl, isobutyl, sec-butyl, tert-butyl, tert-pentyl, iso-octyl, tert-octyl, 2-ethylhexyl and the like are preferably used.

As the aralkyl group, for example, benzyl, α-methylbenzyl, α,α-dimethylbenzyl and the like are mentioned. As the aryl group, for example, phenyl, methylphenyl, dimethylphenyl and the like are mentioned.

Examples of the sulfides indicated by the formula (VIII) include 4,4'-thiobis(2,5-dimethylphenol); 4,4'-thiobis(2-ethyl-5-methylphenol); 4,4'-thiobis(2-n-propyl-5-methylphenol); 4,4'-thiobis(2-isopropyl-5-methylphenol); 4,4'-thiobis(2-n-butyl-5-methylphenol); 4,4'-thiobis(2-isobutyl-5-methylphenol); 4,4'-thiobis(2-sec-butyl-5-methylphenol); 4,4'-thiobis(2-tert-butyl-5-methylphenol); 4,4'-thiobis(2-tert-pentyl-5-methylphenol); 4,4'-thiobis(2-iso-octyl-5-methylphenol) ; 4,4'-thiobis(2-tert-octyl-5-methylphenol); 4,4'-thiobis(2-(2-ethylhexyl)-5-methylphenol): 4,4'-thiobis(2-nonyl-5-methylphenol); 4,4'-thiobis(2-decyl-5-methylphenol); 4,4'-thiobis(2-tert-butyl-5-ethylphenol); 4,4'-thiobis(2-tert-butyl-5-n-propylphenol); 4,4'-thiobis(2-tert-butyl-5-isopropylphenol); 4,4'-thiobis(2-tert-butyl-5-n-butylphenol); 4,4'-thiobis(2-tertbutyl-5-iso-butylphenol); 4,4'-thiobis(2-tert-butyl-5-sec-butylphenol); 4,4'-thiobis(2-tert-butyl-5-tert-butylphenol); 4,4'-thiobis(2-tert-butyl-5-tert-pentylphenol) and the like.

Particularly, 4,4'-thiobis(2-n-propyl-5-methylphenol); 4,4'-thiobis(2-isopropyl-5-methylphenol); 4,4'-thiobis(2-n-butyl-5-methylphenol); 4,4'-thiobis(2-isobutyl-5-methylphenol); 4,4'-thiobis(2-sec-butyl-5-methylphenol); 4,4'-thiobis(2-tert-butyl-5-methylphenol); 4,4'-thiobis(2-tert-pentyl-5-methylphenol); 4,4'-thiobis(2-iso-octyl-5-methylphenol); 4,4'-thiobis(2-tert-octyl-5-methylphenol); 4,4'-thiobis(2-(2-ethylhexyl)-5-methylphenol); 4,4'-thiobis(2-nonyl-5-methylphenol); 4,4'-thiobis(2-decyl-5-methylphenol); 4,4'-thiobis(2-tert-butyl-5-ethylphenol); 4,4'-thiobis(2-tert-butyl-5-n-propylphenol); 4,4'-thiobis(2-tert-butyl-5-isopropylphenol) and the like are preferable.

The polymer electrolyte composition of the present invention comprises a polymer electrolyte and at least one of antioxidant which is selected from a group consisting of the above-mentioned antioxidant containing sulfur.

Examples of the polymer electrolyte of the present invention includes (A) a polymer electrolyte in which an ion exchange group was introduced in a polymer whose main chain consists of an aliphatic hydrocarbon; (B) a polymer electrolyte in which an ion exchange group was introduced in a polymer whose main chain consists of an aliphatic hydrocarbon whose partial hydrogen atom is substituted with fluorine; (C) a polymer electrolyte in which an ion exchange group was introduced in a polymer whose main chain has an aromatic ring; (D) a polymer electrolyte in which an ion exchange group was introduced in a polymer such as a polysiloxane and a polyphosphazene whose main chain does not substantially contain a carbon atom; (E) a polymer electrolyte in which an ion exchange group was introduced in a copolymer consisting of two or more repeating units which are selected from the repeating units constituting a polymer which is (A) to (D) not introduced ion exchange groups, and the like. From the viewpoint of heat resistance, (c) is preferable.

As the ion exchange group, for example, cation exchange groups such as -SO₃H (a sulfonic acid group), -COOH (a carboxylic acid group), -PO (OH)₂ (a phosphonic acid group), -POH (OH) (a phosphinic acid group), -SO₂NHSO₂- (a sulfonylimido group), -(SO₂)₃CH (a sulfonylmethido group), -Ph (OH) (a phenolic hydroxy group, provided that Ph represents a phenyl group); and anion exchange groups such as, -NH₂ (a primary amino group), -NHR (a secondary amino group), -NRR' (a tertiary amino group), -NRR'R'' (a quaternary ammonium group), -NH₃⁺ (an ammonium group) (each of R, R' and R'' represents independently an alkyl group, a cycloalkyl group, an aryl group and the like) can be exemplified. These ion exchange groups may partially or wholly form a salt with a counter-ion.

Further, two kinds or more of ion exchange groups may be introduced in one polymer electrolyte. As the more preferable ion exchange group, a sulfonic acid group (-SO₃H) and/or a phosphonic acid group (-PO(OH)₂), and a sulfonic acid group is more preferable.

As the above-mentioned polymer electrolyte of (A), for example, a poly (vinyl sulfonic acid) , a poly (styrene sulfonic acid), a poly ( (α-methylstyrene) sulfonic acid), and the like are mentioned.

Further, as the above-mentioned polymer electrolyte of (B), there are mentioned a sulfonic acid-type polystyrene-grafted-ethylene-tetrafluoroethylene copolymer (ETFE: for example, Japanese Unexamined Patent Publication No.9-102322) which is constituted by a main chain which was prepared by copolymerization of a fluorocarbon-based vinyl monomer with a hydrocarbon-based vinyl monomer, and a hydrocarbon-based side chain which has a sulfonic acid group; a sulfonic acid-type poly(trifluorostyrene)-grafted-ETFE membrane (for example, USP No.4,012,303 and No.4,605,685) which was made as a solid polymer electrolyte membrane which was obtained by graft-polymerizing α,β,β-trifluorostyrene on a membrane which was prepared by copolymerization of a fluorocarbon-based vinyl monomer with a hydrocarbon-based vinyl monomer, and introducing a sulfonic acid group thereto; and the like.

As the above-mentioned polymer electrolyte of (C), there are mentioned a polymer in which a sulfonic acid group was respectively introduced to a homopolymer such as, for example, a poly(ether ether ketone), a polysulfone, a poly(ether sulfone), a poly(arylene ether), a polyphosphazene, a polyimide, a poly(4-phenoxybenzoyl-1,4-phenylene), a poly(phenylene sulfide), a poly(phenyl quinoxalene), which has a hetero atom such as an oxygen atom in a main chain; an aryl-sulfonated polybenzimidazole, an alkyl-sulfonated polybenzimidazole, an alkyl-phosphonated polybenzimidazole (for example, Japanese Unexamined Patent Publication No.9-110982), a phosphonated poly(phenylene ether) and the like (for example, J. Appl. Polym. Sci., 18, 1969 (1974)).

As the above-mentioned polymer electrolyte of (D), for example, a polysiloxane having a phosphonic acid group which is described in Polymer Prep., 41, No.1, 70 (2000), and the like are mentioned.

The above-mentioned polymer electrolyte of (E) may be those in which an ion exchange group was introduced in a random copolymer, those in which an ion exchange group was introduced in an alternate copolymer, or those in which an ion exchange group was introduced in a block copolymer. As those in which a sulfonic group being one of the ion exchange groups was introduced in a random copolymer, for example, a sulfonated poly (ether sulfone) -dihydroxybiphenyl copolymer is mentioned (for example, Japanese Unexamined Patent Publication No.11-116679).

As the specific example of the block having a sulfonic acid group and/or a phosphonic acid group as the ion exchange group, for example, a block in which a sulfonic acid group and/or a phosphonic acid group was respectively introduced to blocks such as a polystyrene, a poly(α-methylstyrene), a poly(allyl phenyl ether), a poly(phenyl glycidyl ether), a poly(phenylene ether), a poly(phenylene sulfide), a poly(phenylene), a poly (aniline), a poly (ether ether ketone), a poly(ether ether sulfone), a polysulfone, a poly(phenylmethylsiloxane), a poly(diphenylsiloxane), a poly(phenylmethylphosphazene), poly(diphenylphosphazene), an epoxy resin is mentioned.

The polymer electrolyte composition of the present invention comprises the above-mentioned antioxidant and the above-mentioned polymer electrolyte. The amount of the antioxidant is usually 0. 1 to 30% by weight based on the polymer electrolyte and preferably 1 to 20% by weight. When the content of the antioxidant is too little, the effect of improving the oxidation resistance of the polymer electrolyte membrane obtained from polymer electrolyte composition may become small, and when the content is too much, a polymer electrolyte membrane obtained for the polymer electrolyte composition may not be homogeneous. When two or more kinds of antioxidants are used, it is preferable that the total amount is within the above-mentioned range.

The preparation method of the composition is not specifically limited, and for example, may include a method of dissolving the antioxidant in the solution of the polymer electrolyte and then removing a solvent, a method of mixing the antioxidant in a condition in which it is previously dissolved or dispersed in a solvent, with the solution of the polymer electrolyte and then removing the solvent.

Further, when the polymer electrolyte composition of the present invention is produced, additives such as a plasticizer, astabilizer, amold-releasingagentmaybeadded.

Further, when the polymer electrolyte composition of the present invention is produced, or when the polymer electrolyte composition of the present invention is processed or molded for film forming and the like, an intermolecular crosslinking structure may be introduced in the polymer electrolyte. Wherein the intermolecular crosslinking structure is a condition in which polymer chains are mutually and chemically bonded, and it can be introduced by irradiating electron beam, radial rays, ultraviolet rays and the like to the electrolyte composition. At this time, a known crosslinking agent may be appropriately used.

Further, antioxidants other than the above-mentioned antioxidant containing sulfur may be used in combination.

When the polymer electrolyte composition of the present invention is applied to a fuel cell, it is suitably used as a polymer electrolyte membrane. The method of forming the polymer electrolyte membrane is not specifically limited, but a method of forming a membrane in a solution condition (a solution cast method) is preferable.

Specifically, the polymer electrolyte composition of the present invention is dissolved in an appropriate solvent, the solution is coated on a glass plate by flow spreading, and the polymer electrolyte membrane is prepared by removing the solvent. The solvent used for film forming is not specifically limited so far as it can dissolve the polymer electrolyte and be removed after coating. Aprotic polar compounds such as N,N-dimethylformamide, N,N-dimethylacetamide, N-methyl-2-pyrrolidine, dimethyl sulfoxide; or chlorine-containing compounds such as dichloromethane, chloroform, 1,2-dichloroethane, chlorobenzene, dichlorobenzene; alcohols such as methanol, ethanol, propanol; and alkyleneglycohol monoalkyl ethers such as ethyleneglycol monomethyl ether, ethyleneglycol monoethyl ether, propyleneglycol monomethyl ether, propyleneglycol monoethyl ether are preferably used. These can be used alone, and if necessary, a mixture of two or more of solvents may be used. Among these, dimethylformamide, dimethylacetamide, N-methylpyrrolidone, and dimethyl sulfoxide are preferable because the solubility of a polymer to them is good.

When the polymer electrolyte composition of the present invention is used for the fuel cell, it may be used as a polymer electrolyte composite membrane which is obtained by making the polymer electrolyte composite with a supporter.

The supporter is a mother material which is impregnated by the polymer electrolyte composition, and mainly used for further improving the strength of the polymer electrolyte composite membrane, flexibility and durability. Accordingly, it can be used irrespective of the form and the quality of a material such as fibril form and porous membrane form so far as the above-mentioned object for use is satisfied, but it is preferable to use the porous membrane from the viewpoint of using it as the polymer electrolyte composite membrane of a polymer electrolyte fuel cell.

As the form of the porous membrane used for said obj ect, thickness is usually from 1 to 100 µm, preferably from 3 to 30 µm and further preferably from 5 to 20 µm, the diameter of a pore is usually from 0.01 to 10 µm and preferably from 0.02 to 7 µm, and porosity is usually from 20 to 98%, and preferably from 30 to 95%. When the thickness of the porous supporter is too thin, the effect of reinforcing the strength after making composite or the reinforcement effect of imparting flexibility and durability may become insufficient, therefore gas leak (cross leak) may occur. Further, when the membrane thickness is too thick, electric resistance may become high, the composite membrane obtained may not be preferable as the polymer electrolyte composite membrane of a polymer electrolyte fuel cell. When the diameter of a pore is too small, the impregnation of the polymer solid electrolyte composition may be difficult, and when the diameter is too large, the effect of reinforcing the polymer solid electrolyte composition may be weakened. When the porosity is too small, the resistance as the solid electrolyte composite membrane may be enlarged, and when it is too large, the strength of the porous membrane itself may be weakened, and the reinforcement effect may be decreased.

Further, as the quality of a material of the porous support membrane, an aliphatic polymer or a fluorine-containing polymer is preferable from the viewpoint of the reinforcement effect of heat resistance and physical strength.

As the aliphatic polymer preferably used, a polyethylene, a polypropylene, an ethylene-propylene copolymer and the like are mentioned, but it is limited to these. Further, the polyethylene mentioned here includes an ethylene polymer having the crystal structure of a polyethylene. For example, a high density polyethylene, a copolymer of ethylene with other monomer is included, and specifically, a copolymer of ethylene with an α-olefin which is called as a linear low density polyethylene (LLDPE), and the like are included. Among these, polyethylene having high molecular weight is preferable and high density polyethylene having ultra high molecular weight is more preferable. The polypropylene mentioned here includes a propylene polymer having the crystal structure of a polypropylene, and a propylene block copolymer, a random copolymer (these are copolymers of ethylene with 1-butene and the like). A polypropylene having high molecular weight is preferable and polypropylene having ultra high molecular weight is more preferable. In case where heat resistance is required for a polymer electrolyte composite membrane, a polypropylene is more preferable than ethylene because a polypropylene usually has higher heat resistance than polyethylene.

Further, as the fluorine-containing polymer, a known thermoplastic resin which has at least one of carbon-fluorine bonding in a molecule is used. Usually, those in which all of greater part of hydrogen atoms of the aliphatic polymer are substituted with fluorine atoms are preferably used.

As the exemplification of the fluorine-containing polymer preferably used, a polytrifluoroethylene, a polytetrafluoroethylene, a polychlorotrifluoroethylene, a poly(tetrafluoroethylene-hexafluoropropylene), a poly(tetrafluoroethylene-perfluoroalkyl ether), a poly (vinylidene fluoride) and the like are mentioned, but it is not limited to these. Among these, a polytetrafluoroethylene and, a poly(tetrafluoroethylene-hexafluoropropylene) are preferable in the present invention, and a polytetrafluoroethylene is preferable in particular. Further, it is preferable that these fluorine-containing polymers have an average molecular weight of from 100000 or more from the viewpoint of good mechanical strength.

When the membrane comprising the polymer electrolyte composition of the present invention or the composite membrane is used for a fuel cell, the thickness of the membrane is not specifically limited, but is usually from 3 to 200 µm, preferably from 4 to 100 µm, and more preferably from 5 to 50 µm. When the thickness of the membrane is too thin, the strength of the membrane may be lowered, and when the thickness of the membrane is too thick, electric resistance may be high. The thickness of the membrane can be controlled by suitably selecting the concentration of the polymer electrolyte composition solution or the coated amount of the polymer electrolyte composition solution, the thickness of the porous support membrane and the coating thickness to the porous support membrane.

Then, the fuel cell of the present invention is illustrated.

The fuel cell of the present invention comprises the membrane comprising the polymer electrolyte composition of the present invention, and can be produced by joining a catalyst and an electroconductive substance as a current collector on both sides of the above-mentioned membrane respectively.

Said catalyst is not specifically limited so far as it can activate oxidation-reduction reaction with hydrogen or oxygen, and known catalyst can be used, but it is preferable to use the fine particle of platinum. It is preferable that the fine particle of platinum is used by being supported by particle-shape or fiber-like carbon such as active carbon or graphite.

Known material can be also used with respect to the electroconductive substance as a current collector, but a porous carbon fabric or a carbon paper is preferable for efficiently transport a raw material gas to the catalyst.

With respect to a method of contacting the fine particle of platinum or carbon which supported the fine particle of platinum, with a porous carbon fabric or a carbon paper, and a method of contacting it with the polymer electrolyte composition film, for example, known methods such as a method which is described in J. Electrochem. Soc.: Electrochemical Science and Technology, 1988, 135(9), 2209 can be used.

### Examples

The present invention is illustrated below according to examples, but the present invention is not limited to these examples.

### Production Example 1 [Polymer electrolyte (P1)]

Anhydrous cuprous chloride and 2-methylbenzimidazole were stirred in toluene at room temperature under air atmosphere for 15 minutes. Thereto, 2-phenylphenol, 4, 4' -dihydoxybiphenyl and toluene were added, the mixture was stirred at 50°C under oxygen atmosphere for 10 hours and then poured in methanol containing hydrochloric acid to precipitate a polymer, and the polymer was filtered and dried to obtain a poly(phenylphenylene ether). Then, into a flask equipped with an azeotropic distillation equipment, SUMIKAEXEL PES5003P (manufactured by Sumitomo Chemical Co., Ltd.; a polyether sulfone having hydroxy group (s) at the terminal (s)), potassium carbonate, N,N-dimethylacetamide (hereinafter, called as DMAc) and.toluene were added, the mixture was stirred by heating, dehydration was carried out under the condition of azeotropic distillation of toluene and water, toluene is removed by distillation, then, 4,4'-difluorybenzophenone was added, and the mixture was stirred by heating at 160°C for 10 hours. The reaction solution was added dropwise in a large amount of hydrogen chloride-acidic methanol, and the resulting precipitate was filtered, collected and dried to obtain a block copolymer. After the block copolymer obtained was sulfonated by being stirred and dissolved in 98% sulfuric acid at room temperature, the product was added dropwise in ice water to be precipitated, and the precipitate was collected by filtration, rinsed and dried to obtain a sulfonated block copolymer. Hereinafter, said polymer electrolyte is described as (P1) in abbreviation.

### Production Example 2 [Polymer electrolyte (P2)]

4,4'-Dihydoxydiphenyl sulfone, 4,4'-dihydoxybiphenyl and 4,4'-dichlorodiphenyl sulfone were polycondensated at a molar ratio of 7 : 3: 10 in the coexistence of potassium carbonate at a temperature of 200 to 290°C using diphenyl sulfone as a solvent. The obtained polymer was sulfonated by concentrated sulfuric acid to obtain a random copolymer in which a sulfonic acid group was introduced in a biphenyl unit. Hereinafter, said polymer electrolyte is described as (P2) in abbreviation.

### Antioxidant

S-1: 2,4,8,10-Tetra-tert-butyl-6-[3-(3-methyl-4-hydroxy-5-tert-butylphenyl)propoxy]dibenzo [d,f] [1,3,2] dioxaphosphepin; manufactured by Sumitomo Chemical Co., Ltd. A trade name: SUMILIZER GP.
S-2: Tris(2,4-di-tert-butylphenyl) phosphite; manufactured by Sumitomo Chemical Co., Ltd. A trade name: SUMILIZER P-16.
S-3: Tetrakis(2,4-di-tert-butylphenyl) -4,4'-biphenylene-di-phosphonite; manufactured by Clearant Co., Ltd. A trade name: SANDOSTAB P-EPQ.
S-4: Di-octadecylpentaerythritol diphosphonite; manufactured by ASAHIDENKA Co., Ltd. A trade name: ADEKASTAB PEP-8.
S-5: Bis(2,6-di-tert-butyl-4-methylphenyl) pentaerythritol-diphosphite; manufactured by ASAHIDENKA Co. , Ltd. A trade name: ADEKASTAB PEP-36.
S-6: Bis(2,4-di-tert-butylphenyl) pentaerythritol-di-phosphite; manufactured by GE Specialty Chemicals Co., Ltd. A trade name: ULTRANOX 626.
S-7: 2,2'-Methylenebis(4,6-di-tert-butylphenyl)-(2-ethylhexyl) phosphite; manufactured by ASAHIDENKA Co., Ltd. A trade name: ADEKASTAB HP-10.
S-8: Tetrakis(2,4-di-tert-butyl-5-methylphenyl) -4,4'-biphenylene-di-phosphonite; manufactured by YOSHITOMI Fine Chemicals Co., Ltd. A trade name: GSYP-101.
S-9: Pentaerythrityl-tetrakis-(3-dodecylthiopropionate); manufactured by Sumitomo Chemical Co., Ltd. A trade name: SUMILIZER TP-D.
S-10: 4,4'-Thiobis(2-tert-butyl-5-methylphenol); manufactured by Sumitomo Chemical Co., Ltd. A trade name: SUMILIZER WY-R.
S-11: Tetradecyl-3,3'-thiodipropionate; manufactured by Sumitomo Chemical Co., Ltd. A trade name: SUMILIZER TPM.
S-12: Octadecyl-3,3'-thiodipropionate; manufactured by Sumitomo Chemical Co., Ltd. A trade name: SUMILIZER TPS.
S-13: Dodecyl-3,3'-thiodipropionate; manufactured by Sumitomo Chemical Co., Ltd. A trade name: SUMILIZER TPL-R. 0-1: 4,4'-Butylydene-bis(2-tert-butyl-5-methylphenol); manufactured by Sumitomo Chemical Co., Ltd. A trade name: SUMILIZER BBM-S.

### Evaluation of radical resistance

Each of the polymer electrolyte membranes were immersed in an aqueous solution in which 0.25 ppm of ferrous chloride was added in a 3% hydrogen peroxide aqueous solution at 90°C, and the evaluation of oxidation resistance property was carried out by the weight change of the membrane after the lapse of 20 minutes. The retention rate (%) of weight is indicated by a value × 100% which was obtained by dividing the weight of membrane after the lapse of 20 minutes in immersion by the weight before immersion.

### Measurement of proton conductivity

The measurement of proton conductivity was carried out at conditions of 80°C and 90%RH in a constant humidity and temperature vessel according to alternate impedance method, using SI1260-TYPE IMPEDANCE·GAIN/PHASE ANALYZER (IMPEDANCE/GAIN-PHASE ANALYZER, manufactured by Solartoron Co., Ltd.) and SI1287-TYPE POTENTIOSTAT (ELECTROCHEMICAL INTERFACE, manufactured by Solartoron Co., Ltd.). Unit is S/cm.

### Evaluation of fuel cell property

Platinum catalyst supported on a fiber-like carbon and a porous carbon fabric as an electroconductive substance were contacted on both side of the polymer electrolyte membrane. Humidified oxygen gas was flown on one side of said unit and humidified hydrogen gas was flown on another side, and the electric generation property of said contact body was measured.

### Reference Examples 1 to 8

### [Production of polymer electrolyte membrane comprising polymer electrolyte (P1) and antioxidant containing tri-valent phosphorous]

A solution was prepared by mixing 1.425g of P1, 0.075g of a antioxidant containing tri-valent phosphorous and 9. 075g of DMAc, and the mixture was spread by coating on a glass plate. The solvent was dried under normal pressure to obtain a polymer electrolyte membrane. Any of the polymer electrolyte membranes had homogeneous appearance.

### Comparative Example 1

### [Production of polymer electrolyte membrane comprising only polymer electrolyte (P1)]

A polymer electrolyte membrane was obtained in the same manner as in reference examples 1 to 8, except that an antioxidant was not added. The polymer electrolyte membrane which was obtained had homogeneous appearance. The result of carrying out the evaluation of radical resistance was shown in tables 1 and 5.

### Comparative Example 2

### [Production of polymer electrolyte membrane comprising polymer electrolyte (P1) and phenol-based antioxidant]

A polymer electrolyte membrane was obtained in the same manner as in reference examples 1 to 8, except that a phenol-based antioxidant was used in place of the antioxidant containing tri-valent phosphorous. The polymer electrolyte membrane which was obtained had homogeneous appearance. The result of carrying out the evaluation of radical resistance was shown in tables 1 and 5.

**TABLE 1**

| Example | Antioxidant | Retention rate of weight (%) |
|---|---|---|
| Comparative Example 1 | - | 70 |
| omparative Example 2 | 0-1 | 76 |

### Reference Example 9

### [Production of polymer electrolyte composite membrane]

As a porous membrane, a porous support membrane (the thickness of membrane: 15 µm, porosity: 90%, and the diameter of a pore: 3 µm) made of polytetrafluoroethylene was used. Said porous membrane was fixed on a glass plate. A solution was prepared by mixing 1.425g of P1, 0.075g of a antioxidant containing.tri-valent phosphorous which was used in reference example 3 and 9.075g of DMAc, and the mixture was uniformly spread by coating on said porous membrane. At this time, it was observed that the porous support membrane which is opaque becomes transparent by phenomenon that the above-mentioned solution is permeated in the porous support membrane and reaches the rear face of the porous support membrane. It was dried at 80°C under normal pressure. Then it was rinsed with ion exchange water to obtain a polymer electrolyte composite membrane.

### Reference Example 10

### [Production of polymer electrolyte composite membrane]

As a porous membrane, a porous membrane (the thickness of membrane: 9 µm, porosity: 36%, and the diameter of a pore: 0.04 µm) made of polyethylene was used. Said porous membrane was fixed on a glass plate. A solution was prepared by mixing 1.425g of P1, 0.075g of a antioxidant containing tri-valent phosphorous which was used in reference example 3 and 9.075g of DMAc, and the mixture was uniformly spread by coating on said porous membrane. At this time, it was observed that the polyethylene porous membrane which is opaque becomes transparent by phenomenon that the above-mentioned solution is permeated in the polyethylene porous membrane and reaches the rear face of the porous support membrane. It was dried at 80°C under normal pressure. Then it was rinsed with ion exchange water to obtain a polymer electrolyte composite membrane.

### Comparative Example 3

### [Production of polymer electrolyte composite membrane]

A polymer electrolyte composite membrane was obtained in the same manner as in reference example 9, except that an antioxidant was not used. The result of carrying out the evaluation of radical resistance was shown in tables 2 and 6.

### Comparative Example 4

### [Production of polymer electrolyte composite membrane]

A polymer electrolyte composite membrane was obtained in the same manner as in reference example 10, except that an antioxidant was not used. The polymer electrolyte composite membrane which was obtained had homogeneous appearance. The result of carrying out the evaluation of radical resistance was shown in tables 2 and 6.

**TABLE 2**

| Example | Antioxidant | Retention rate of weight (%) |
|---|---|---|
| Comparative Example 3 | - | 81 |
| Comparative Example 4 | - | 75 |

### Reference Example 11

### [Production of polymer electrolyte membrane]

A solution was prepared by adequately mixing 1.425g of P2, 0. 075g of a antioxidant containing tri-valent phosphorous which was used in reference example 3 and 9.075g of DMAc, and the mixture was uniformly spread by coating on a glass plate. The solvent was dried under normal pressure to obtain a polymer electrolyte membrane.

### Comparative Example 5

### [Production of polymer electrolyte membrane]

A polymer electrolyte membrane was obtained in the same manner as in reference example 11, except that an antioxidant was not added. The polymer electrolyte membrane had homogeneous appearance. The result of carrying out the evaluation of radical resistance was shown in tables 3 and 7.

**TABLE 3**

| Example | Antioxidant | Retention rate of weight (%) |
|---|---|---|
| Comparative Example 5 | - | 85 |

With respect to comparative Example 1, proton conductivity and the evaluation of fuel cell property (the operation of action and termination was repeated for one week.) were carried out. The result was shown in table 4

**TABLE 4**

| | Proton conductivity (S/cm) | Evaluation of fuel cell property |
|---|---|---|
| Comparative Example 1 | 9×10⁻² | Gas leak was generated and lowering of property was observed |

### Examples 1 to 5

### [Production of polymer electrolyte membrane]

A solution was prepared by adequately mixing 1.425g of P1, 0.075g of a antioxidant containing sulfur and 9.075g of DMAc, and the mixture was uniformly spread by coating on a glass plate. The solvent was dried under normal pressure to obtain a polymer electrolyte membrane. Any of the polymer electrolyte membranes had homogeneous appearance. The result of carrying out the evaluation of radical resistance was shown in table 5.

**TABLE 5**

| Example | Antioxidant | Retention rate of weight (%) |
|---|---|---|
| Example 1 | S-9 | 87 |
| Example 2 | S-10 | 78 |
| Example 3 | S-11 | 84 |
| Example 4 | S-12 | 85 |
| Example 5 | S-13 | 87 |
| Comparative Example 1 | - | 70 |
| Comparative Example 2 | O-1 | 76 |

### Example 6

### [Production of polymer electrolyte composite membrane]

As a porous membrane, a porous membrane (the thickness of membrane: 15 µm, porosity: 90%, and the diameter of a pore: 3.0 µm) made of a polytetrafluoroethylene was used. Said porous membrane was fixed on a glass plate. A solution was prepared by mixing 1.425 g of P1, 0.075 g of an antioxidant containing sulfur which was used in example 1 and 9.075g of DMAc, and the mixture was uniformly spread by coating on said porous membrane. At this time, it was observed that the polytetrafluoroethylene porous membrane which is opaque becomes transparent by phenomenon that the above-mentioned solution is permeated in the polytetrafluoroethylene porous membrane and reaches the rear face of the porous support membrane. It was dried at 80°C under normal pressure. Then it was rinsed with ion exchange water to obtain a polymer electrolyte composite membrane. The result of carrying out the evaluation of radical resistance was shown in table 6.

### Example 7

### [Production of polymer electrolyte composite membrane ]

As a porous membrane, a porous membrane (the thickness of membrane: 9 µm, porosity: 36%, and the diameter of a pore: 0.04 µm) made of a polyethylene was used. Said porous membrane was fixed on a glass plate. A solution was prepared by mixing 1.425g of P1, 0.075g of an antioxidant containing sulfur which was used in example 1 and 9.075g of DMAc, and the mixture was uniformly spread by coating on said porous membrane. At this time, it was observed that the polyethylene porous membrane which is opaque becomes transparent by phenomenon that the above-mentioned solution is permeated in the polyethylene porous membrane and reaches the rear face of the porous support membrane. It was dried at 80°C under normal pressure. Then it was rinsed with ion exchange water to obtain a polymer electrolyte composite membrane. The result of carrying out the evaluation of radical resistance was shown in table 6.

**TABLE 6**

| Example | Antioxidant | Retention rate of weight (%) |
|---|---|---|
| Example 6 | S-9 | 95 |
| Comparative Example 3 | - | 81 |
| Example 7 | S-9 | 92 |
| Comparative Example 4 | - | 75 |

### Example 8

### [Production of polymer electrolyte membrane]

A solution was prepared by mixing 1.425g of P2, 0.075g of an antioxidant containing sulfur which was used in example 1 and 9. 075g of DMAc, and the mixture was spread by coating on a glass plate. The solvent was dried under normal pressure to obtain a polymer electrolyte membrane. The result of carrying out the evaluation of radical resistance was shown in table 7.

**TABLE 7**

| Example | Antioxidant | Retention rate of weight (%) |
|---|---|---|
| Example 8 | S-9 | 95 |
| Comparative Example 5 | - | 85 |

### Example 9

With respect to example 3, example 6 and comparative example 1, proton conductivity and the evaluation of fuel cell property (the operation of action and termination was repeated for one week.) were carried out. The result was shown in table 8.

**TABLE 8**

| | Proton conductivity (S/cm) | Evaluation of fuel cell property |
|---|---|---|
| Example 3 | 9×10⁻² | Lowering of fuel cell property and gas leak were not observed |
| Example 6 | 9×10⁻² | Lowering of fuel cell property and gas leak were not observed |
| Comparative Example 1 | 9×10⁻² | Gas leak was generated and lowering of property was observed |

Since the polymer electrolyte composition of the present invention contains a specific sulfur-containing compound as an antioxidant containing sulfur, it shows a superior radical resistance property. Further, a fuel cell superior in durability is obtained by using the polymer electrolyte membrane which is obtained from said polymer electrolyte composition, as the polymer electrolyte membrane of the fuel cell.

## Claims

1. A polymer electrolyte composition comprising a polymer electrolyte and at least one of antioxidant selected from an antioxidant containing sulfur, wherein the antioxidant containing sulfur is one of sulfide compound selected from the formulae (VII) to (VIII):
[R₁₈SCH₂CH₂C(O)OCH₂]₄C (VII)
(wherein R₁₈ represents an alkyl group having 1 to 30 carbons, an aralkyl group having 7 to 30 carbons, or an aryl group having 6 to 30 carbons), 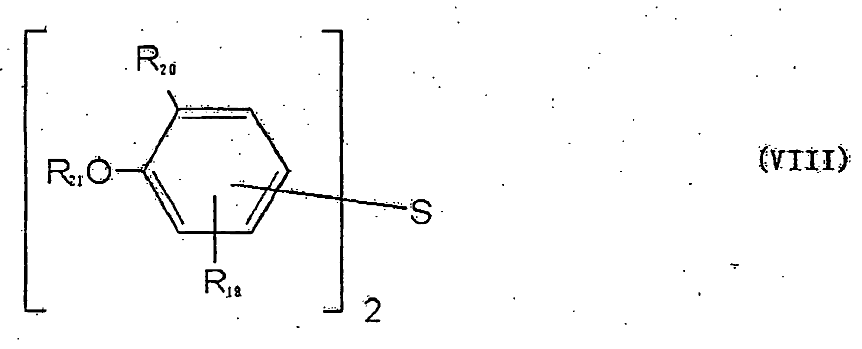 (wherein each of R₁₉, R₂₀ and R₂₁ represents independently a hydrogen atom, an alkyl group having 1 to 30 carbons, an aralkyl group having 7 to 30 carbons, or an aryl group having 6 to 30 carbons),

2. A polymer electrolyte membrane comprising a polymer electrolyte composition according to claim 1.

3. A polymer electrolyte composite membrane comprising a polymer electrolyte composition according to claim 1 and a supporter.

4. A polymer electrolyte composite membrane according to claim 3, wherein the supporter is a porous support membrane comprising an aliphatic polymer or a fluorine-containing polymer.

5. A fuel cell comprising the polymer electrolyte membrane according to claim 2.

6. A fuel cell comprising the polymer electrolyte composite membrane according to claim 3 or 4

## Patentansprüche

1. Eine Polymerelektrolytzusammensetzung, umfassend einen Polymerelektrolyten und mindestens ein Antioxidans, ausgewählt aus einem Antioxidans, das Schwefel enthält, wobei das Schwefel enthaltende Antioxidans eine Sulfidverbindung ist, die aus den Formeln (VII) bis (VIII) ausgewählt ist:
[R₁₈SCH₂CH₂C(O)OCH₂]₄C (VII)
(wobei R₁₈ einen Alkylrest mit 1 bis 30 Kohlenstoffen, einen Aralkylrest mit 7 bis 30 Kohlenstoffen oder einen Arylrest mit 6 bis 30 Kohlenstoffen bedeutet), 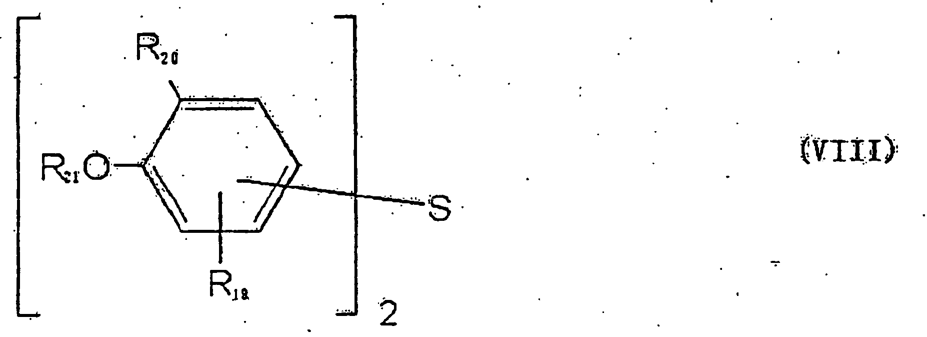 (wobei jedes R₁₉, R₂₀ und R₂₁ unabhängig ein Wasserstoffatom, einen Alkylrest mit 1 bis 30 Kohlenstoffen, einen Aralkylrest mit 7 bis 30 Kohlenstoffen oder einen Arylrest mit 6 bis 30 Kohlenstoffen bedeutet).

2. Eine Polymerelektrolytmembran, umfassend eine Polymerelektrolytzusammensetzung nach Anspruch 1.

3. Eine Polymerelektrolytverbundmembran, umfassend eine Polymerelektrolytzusammensetzung nach Anspruch 1 und einen Träger.

4. Eine Polymerelektrolytverbundmembran nach Anspruch 3, wobei der Träger eine poröse Trägermembran ist, die ein aliphatisches Polymer oder ein fluorhaltiges Polymer umfasst.

5. Eine Brennstoffzelle, umfassend die Polymerelektrolytmembran nach Anspruch 2.

6. Eine Brennstoffzelle, umfassend die Polymerelektrolytverbundmembran nach Anspruch 3 oder 4.

## Revendications

1. Composition d'électrolyte polymère comprenant un électrolyte polymère et au moins un antioxydant choisi parmi un antioxydant contenant du soufre, où l'antioxydant contenant du soufre est un composé de sulfure choisi parmi les formules (VII) à (VIII) :
[R₁₈SCH₂CH₂C(O)OCH₂]₄C (VII)
(où R₁₈ représente un groupe alkyle ayant 1 à 30 atomes de carbone, un groupe aralkyle ayant 7 à 30 atomes de carbone ou un groupe aryle ayant 6 à 30 atomes de carbone), 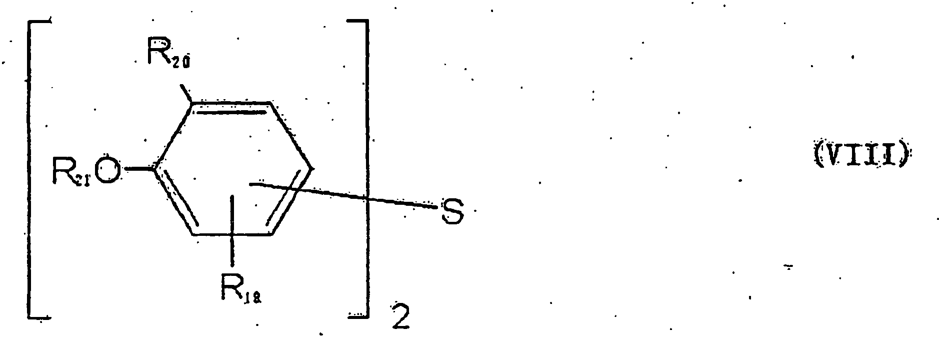 (où chacun de R₁₉, R₂₀ et R₂₁ représente indépendamment un atome d'hydrogène, un groupe alkyle ayant 1 à 30 atomes de carbone, un groupe aralkyle ayant 7 à 30 atomes de carbone ou un groupe aryle ayant 6 à 30 atomes de carbone).

2. Membrane à électrolyte polymère comprenant une composition d'électrolyte polymère selon la revendication 1.

3. Membrane composite à électrolyte polymère comprenant une composition d'électrolyte polymère selon la revendication 1 et un support.

4. Membrane composite à électrolyte polymère selon la revendication 3 où le support est une membrane de support poreuse comprenant un polymère aliphatique ou un polymère contenant du fluor.

5. Pile à combustible comprenant la membrane à électrolyte polymère selon la revendication 2.

6. Pile à combustible comprenant la membrane composite à électrolyte polymère selon la revendication 3 ou 4.
